Europäisches Patentamt

(19) European Patent Office ·

Office européen des brevets

(11) Publication number: **0 128 044**
**B1**

⑫ · **EUROPEAN PATENT SPECIFICATION**

(45) Date of publication of patent specification: **13.09.89**

(21) Application number: **84303789.6**

(22) Date of filing: **05.06.84**

(60) **Divisional application 87201547 filed on 14.08.87.**

(51) Int. Cl.⁴: **G 02 B 6/38**

(54) Fiber optic connector having dual supporting surfaces and method of terminating fiber optic transmission members.

(30) Priority: **06.06.83 US 501599**
**06.06.83 US 501597**

(43) Date of publication of application:
**12.12.84 Bulletin 84/50**

(45) Publication of the grant of the patent:
**13.09.89 Bulletin 89/37**

(84) Designated Contracting States:
**AT BE CH DE FR GB IT LI NL SE**

(56) References cited:
**EP-A-0 079 160**
**DE-A-3 138 290**
**US-A-3 999 837**

(73) Proprietor: **AMP INCORPORATED (a New Jersey corporation)**
**470 Friendship Road P.O. Box 3608**
**Harrisburg Pennsylvania 17105 (US)**

(72) Inventor: **Caron, Bernard George**
**4330 Winthrop Drive**
**Harrisburg Pennsylvania 17112 (US)**
Inventor: **Cooper, Ronald Francis**
**Adams County Winery Peach Tree Torad**
**Orrtanna Pennsylvania 17353 (US)**

(74) Representative: **Warren, Keith Stanley et al**
**BARON & WARREN 18 South End Kensington**
**London W8 5BU (GB)**

Courier Press, Leamington Spa, England.

# Description

This invention relates to fiber optic connectors for terminating fiber optic transmission members including matable supporting surfaces.

U.S. Patent No. 3,999,837 discloses a fiber optic connector which comprises a housing member and ferrule members terminated onto exposed ends of fiber optic transmission members. The housing member has a profiled bore including a center cylindrical section and outer first and second identically-shaped sections of different diameters. The ferrule members have cylindrical nose sections that tightly fit into the cylindrical section of the housing, tapered sections that engage the outer first and second sections, and annular shoulders that engage surfaces of the housing member. Coupling members on the ferrule members are coupled to the housing member securing the ferrule members in the profiled bore with the cylindrical section applying radial compressive forces to the cylindrical nose sections thereby axially aligning the fiber optic transmission members and the annular shoulders engage the surface of the housing member limiting movement of the ferrule members into the profiled bore, positioning the front surfaces of the ferrule members adjacent each other and minimizing misalignment of the fiber optic transmission members when lateral forces are applied to the ferrule members.

When the annular shoulders of the ferrule members do not engage the surfaces of the housing member, lateral forces can cause misalignment of the fiber optic transmission members. Misalignment of single mode and multimode fibers can result in signal loss or degradation.

Fiber optic connectors are used in equipment that is subject to wide temperature variations which can be from −40°C to 85°C, especially in telecommunication and data transmission equipment. The fiber optic connectors will expand and contract under these temperatures. If a fluid is used in the connectors, the fluid under elevated temperatures will be forced away from the interface between ferrule members of the connector and will not return under lower temperatures because of the connector structure. The front ends of the connectors also need room to expand under elevated temperatures to prevent damage from occurring to the ends of the fiber optic transmission members. This is necessary even if no fluid is used.

It is known from Applicants EP—A—0105597, citable under Article 54 paragraph 3, to provide a fiber optic connector for connecting fiber optic transmission members together, comprising a rigid housing member having a profiled bore extending therethrough, a pair of ferrule members of resiliently rigid but deformable material having a profiled bore extending axially therethrough, each ferrule member terminating an end of a fiber optic transmission member, and having a profiled front end section which has a front cylindrical section, an outwardly tapering section and an alignment section, said front cylindrical section having a substantially flat front surface with the front end of the fiber optic transmission member being coplanar with said flat front surface, the profiled front end sections of each ferrule member being disposed in a different end of the profiled bore of the housing member, and a coupling member engaging each ferrule member urging the profiled front end of each ferrule member into the profiled bore of the housing member causing the opposed front surfaces of the ferrule members to engage or nearly engage each other. In the connector of EP—A—0105597 the cylindrical front sections of the ferrule members fit or engage the housing bore at a central cylindrical section in a tight fit, and the tapered section of the housing bore is larger in dimension than the tapered section of the complimentary ferrule.

It is an object of the invention to provide an improved fiber optic connector.

According to the present invention a fiber optic connector for connecting fiber optic transmission members together, comprising a rigid housing member having a profiled bore extending therethrough, a pair of ferrule members of resiliently rigid but deformable material having a profiled bore extending axially therethrough, each ferrule member terminating an end of a fiber optic transmission member, and having a profiled front end section which has a front cylindrical section, an outwardly tapering section and an alignment section, said front cylindrical section having a substantially flat front surface with the front end of the fiber optic transmission member being coplanar with said flat front surface, the profiled front end sections of each ferrule member being disposed in a different end of the profiled bore of the housing member, and a coupling member engaging each ferrule member urging the profiled front end of each ferrule member into the profiled bore of the housing member causing the opposed front surfaces of the ferrule members to engage or nearly engage each other, is characterized in that the profiled bore of said rigid housing member has a central cylindrical surface, surfaces tapering outwardly on each side of said central cylindrical surface, and a tapered support surface at the outer end of each said tapered surface, and with respect to each ferrule member, said front cylindrical section is slightly greater in diameter than the diameter of said central cylindrical surface of said housing member, said tapered section of the ferrule is slightly smaller in dimension than the corresponding tapered surface of the profiled bore, and said alignment section is slightly larger in dimension than said support surface, all such that when said profiled front end of a said ferrule member is disposed in said profiled bore of said housing member said front cylindrical section tightly engages said central cylindrical surface causing a reduction in diameter of said front cylindrical section and axially aligns the fiber optic transmission member, said tapered section is disposed along said tapered surface, and said support surface tightly and sealingly engages said alignment section thereby supporting said ferrule member against lateral forces thereon.

The invention will now be described, by way of example, with reference to the accompanying drawings, in which:—

Figure 1 is a perspective view of a ferrule member terminating a fiber optic transmission member and a polishing fixture exploded therefrom.

Figure 2 is a perspective view showing the polishing of the front end of the ferrule member and fiber optic transmission member.

Figure 3 is a cross-sectional view of the front end of the ferrule member terminated onto a fiber optic transmission member prior to polishing.

Figure 4 is a view similar to Figure 3 after the front end of the ferrule member and fiber optic transmission member have been polished, and

Figure 5 is a view similar to Figure 3 showing a cleaved end of a fiber optic transmission member prior to polishing the front end of the terminated ferrule member.

Figure 6 is a perspective and exploded view of a fiber optic connector utilizing ferrule members of Figure 4.

Figure 7 is a view similar to Figure 6 showing the connector in an assembled condition and being fine tuned to accurately align the axes of the fiber optic transmission members.

Figure 8 is a longitudinal sectional view of Figure 7.

Figure 9 is a part longitudinal sectional view of an alternative embodiment.

A ferrule member 10 is terminated onto an end of a fiber optic cable 12. The fiber optic cable 12 includes a fiber optic transmission member 14 surrounded by cladding material to enable light to be transmitted therealong. Buffer material 16, as shown in Figure 8, protects the cladded fiber optic transmission member 14 and an outer jacket 18 protects the entire cable assembly. The cable typically includes strength members (not shown) to provide tensile strength thereto. Fiber optic cable 12 is stripped to expose a length of fiber optic transmission member 14 to enable it to be terminated in ferrule member 10. Fiber optic transmission member 14 can be either plastic or glass.

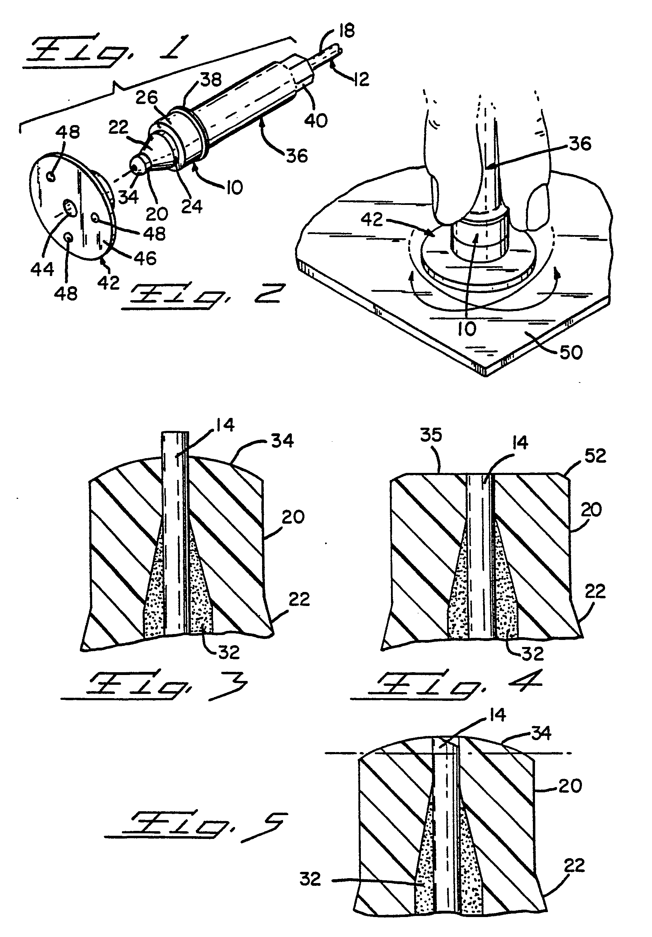

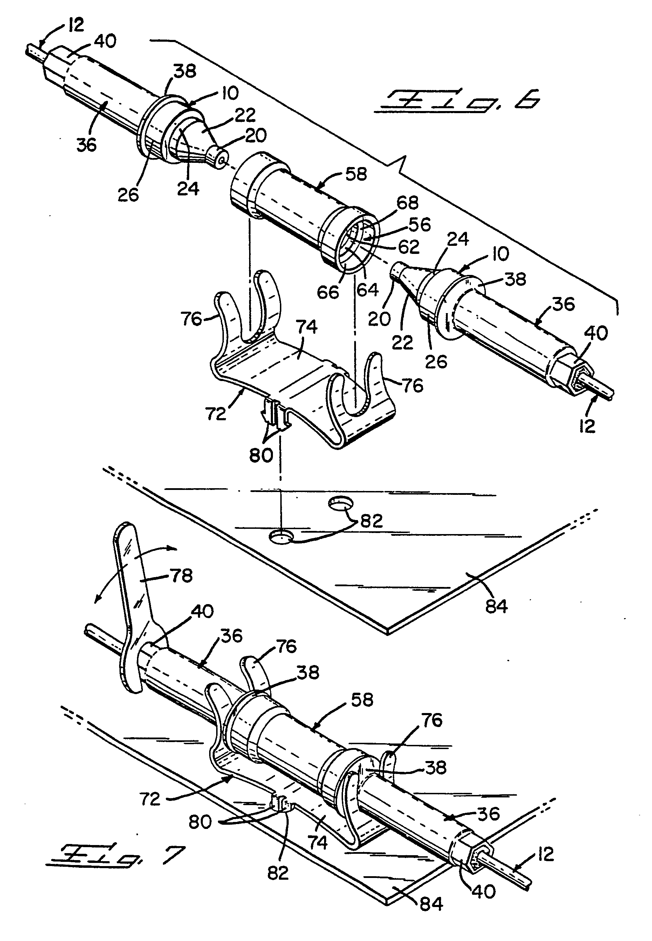

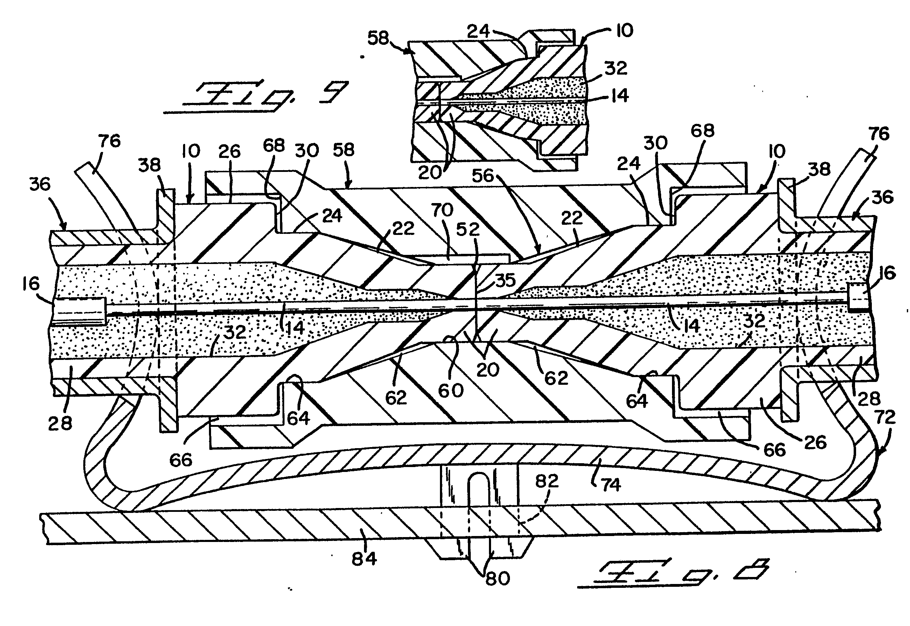

Ferrule member 10 is preferably molded from a suitable plastic material having resilient characteristics. Ferrule member 10 is of the type disclosed in U.S. Patent No. 3,999,837, the disclosure of which is completely incorporated herein by reference. Ferrule member 10 has a profiled front end which comprises a front surface 34, a front cylindrical section 20, a tapered section 22, an intermediate cylindrical alignment section 24, a rear cylindrical section 26, and a tubular section 28 (see Figure 8). A shoulder 30 is located at the junction of sections 24 and 26. A profiled bore 32 extends through ferrule member 10 and necks down in front cylindrical section 20 to a diameter to accommodate fiber optic transmission member 14. Front surface 34 of ferrule member 10 has a domed configuration when formed, as best illustrated in Figure 3. A metal ferrule 36 is disposed on tubular section 28 and has a flange 38 in engagement with section 36. Outer end 40 of metal ferrule 36 has a hexagonal or other suitable configuration.

Fiber optic cable 12 is terminated in ferrule member 10 by inserting a stripped end of fiber optic cable 12 within bore 32 until a short section of fiber optic transmission member 14 extends outwardly beyond domed front end 34. An epoxy resin can be located in bore 32 to secure fiber optic transmission member 14 in position in ferrule member 10, whereafter metal ferrule 36 is crimped onto outer jacket 18 of fiber optic cable 12 thereby terminating fiber optic cable 12 in ferrule member 10. The section of fiber optic transmission member 14 that extends beyond domed front end 34 is removed by cutting, if transmission member 14 is plastic, or is cleaved, if transmission member 14 is glass. Fiber optic cable 12 can be secured in ferrule member 10 in accordance with the teachings of European Patent Application NO. 83302655.2 filed May 10, 1983 or in any other suitable manner.

After fiber optic cable 12 has been terminated in ferrule member 10, the profiled front end of ferrule member 10 is frictionally positioned in a profiled bore 44 of polishing fixture 42: bore 44 has the same configuration as that of sections 20, 22, and 24 of ferrule member 10 except that they are dimensioned to compress section 20 in tight engagement with the fiber optic transmission member 14 in bore 32 and the domed front end 34 extends beyond the outer flat surface 46 of fixture 42. Rounded projections 48 extend outwardly from surface 46.

Terminated ferrule member 10 with fixture 42 thereon is now subjected to a polishing action by fixture 42 moving relative to a polishing medium 50 such as, for example, very fine silicon carbide or aluminum oxide grit, as shown in Figure 2, for a period of time. Radiussed projections 48 stabilize the polishing and, when they are worn away, the domed front surface 34 along with the end of fiber optic transmission member 14 are polished as a flat surface 35 and are in the same plane, as illustrated in Figure 4, leaving a rounded peripheral surface 52 between the front polished surface 35 and the external surface of cylindrical section 20.

As shown in Figure 5, when fiber optic transmission member 14 is glass and is cleaved, the cleaved end can be uneven. Thus, when the domed front end 34 is polished as hereinabove described, the uneven end of fiber optic transmission member 14 is polished to a flat planar configuration, as shown in Figure 4, thereby eliminating the fragmented end.

Advantages of having a domed front surface 34 are less material to polish and this reduces the amount of time to polish the front end of ferrule member 10.

Terminated ferrule members 10 can now be connected together in a profiled bore 56 of a rigid connector housing member 58 which is of the type disclosed in European Patent Application No. 83304960.4 filed August 26, 1983, the disclosure of which is incorporated herein by reference. Profiled bore 56 has a central cylindrical surface 60, tapered surfaces 62 on each side of surface 60, cylindrical support surfaces 64, and outer cylindrical surfaces 66. Shoulders 68 are located at the junctions between surfaces 64 and 66. A slot 70 is located in communication with central cylindrical surface 60, as shown in Figure 8.

The diameters of front cylindrical sections 20 of ferrule members 10 are slightly greater than the diameter of central cylindrical surface 60 of bore 56 and this also true with respect to alignment sections 24 of ferrule members 10 being slightly greater than cylindrical support surface 64 of profiled bore 56. The dimensions of tapered sections 22 of ferrule members 10 are slightly less than of tapered surfaces 62 of profiled bore 56. Thus, when the profiled front ends of ferrule members 10 are inserted into profiled bore 56, the resilient nature of the material of ferrule member 10 will casue the front sections 20 to be compressibly reduced in diameter as a result of a radial compressive force being applied by housing member 58 thereby concentrically aligning fiber optic transmission member 14 so that they are axially aligned within central cylindrical section 20 of profiled bore 56, as shown in Figure 8. The tight engagement of alignment sections 24 with corresponding cylindrical support surfaces 64 will support the ferrule members 10 within bore 56 to resist lateral forces being applied to the outer ends of ferrule members 10 and to form a seal thereat. Depending on the tolerances involved, shoulder 30 of ferrule members 10 can abut against shoulders 68 of housing member 58 limiting the movement of ferrule members 10 within bore 56. Sections 24 can be slightly tapered along with support surfaces 64, if desired, as shown in Figure 9.

In many cases, a fluid that has an index of refraction substantially equal to that of fiber optic transmission members 14 is located at the interface between the front polished surfaces 35 of ferrule members 10 which enhances the transmission of light between the fiber optic transmission members 14 and protects the front ends of the fiber optic transmission members 14 when engagement therebetween takes place. The reservoir formed by peripheral surfaces 52 at the peripheries of the front ends of sections 20 of ferrule members 10, as shown in Figure 8, will enable the fluid to be collected therein upon expansion of the fluid as a result of higher temperatures and the fluid can also move into slot 70 if the temperatures are quite high. The fluid will be retained within the fiber optic connector by virtue of the seal formed between sections 24 and 64. Slot 70 also acts as a vent to prevent hydraulic action from taking place when index-matching fluid is used; slot 70 also can prevent entrapped air from forcing the ferrule members apart under high temperature if no index-matching liquid is used.

Spring clip member 72 forms a coupling member which engages ferrule members 10 urging them into bore 56 and maintaining them therein. Spring clip member 72 is stamped and formed from a metal having suitable spring characteristics such as, for example, spring steel, and it includes an arcuate-shaped base member 74 from the ends of which extend curved forks 76. A fiber optic connector which comprises the profiled front ends of ferrule members 10 disposed in profiled bore 56 of rigid housing 58 is positioned in spring clip member 72 with metal ferrules 36 being disposed in curved forked ends 76 as shown in Figures 7 and 8, with the curved forked ends 76 engaging against flanges 38 of metal ferrules 36 thereby applying axial forces onto ferrule members 10 to maintain cylindrical sections 20 in concentric alignment within central cylindrical sections 60 of profiled bore 56 of housing member 58 thereby maintaining fiber optic transmission members 14 in axial alignment due to the resilient characteristics of ferrule members 10. The arcuate configuration of base member 74 contributes to the spring characteristics of forked ends 76. Other types of coupling members can, of course, be used such as, for example, threaded members, bayonet members or the like, and coil springs would then be used on metal ferrules 36.

After the fiber optic connector has been positioned in spring clip member 72, light can be transmitted along fiber optic transmission members 14 to determine if further alignment is necessary. If further alignment is necessary, a wrench 78 is used on outer end 40 of one of metal ferrules 36 and the corresponding ferrule member 10 can be rotated to accurately align the axes of fiber optic transmission members 14.

A pair of barçd legs 80 extend outwardly from base member 74 on each side at a central location thereof for engagement with holes 82 in a mounting plate 84. Legs 80 need not be present so that spring clip member 72 can maintain the fiber optic connector in a connected condition in a free-handing manner if desired.

From the foregoing, a fiber optic connector has been described that is sealed from the environment, can withstand wide temperature variations, can be used in many types of installations, enables the fiber optic connectors to be readily disconnected, enables the fiber optic connectors to be adjusted to provide low loss connection, enables the terminations to be tested, and provides a reservoir to accommodate expansion and contraction variations of a fluid disposed between the front ends of mated ferrule members.

## Claims

1. A fiber optic connector for connecting fiber optic transmission members (14) together, comprising a rigid housing member (58) having a profiled bore (56) extending therethrough, a pair of ferrule members (10) of resiliently rigid but deformable material having a profiled bore (32) extending axially therethrough, each ferrule member (10) terminating an end of a fiber optic transmission member (14), and having a profiled front end section which has a front cylindrical section (20), an outwardly tapering section (22) and an alignment section (24), said front cylindrical section (20) having a substantially flat front surface (35) with the front end of the fiber optic transmission member (14) being coplanar with said flat front surface (35), the profiled front end sections of each ferrule member (10) being disposed in a different end of the profiled bore (56) of the housing member (58), and a coupling member (72) engaging each ferrule member (10) urging the profiled front end of each ferrule member (10) into the profiled bore (56) of the housing member (58) causing the opposed front surfaces (35) of the ferrule members (10) to engage or nearly engage each other, characterized in that the profiled bore (56) of said rigid housing member (58) has a central cylindrical surface (60), surfaces (62) tapering outwardly on each side of said central cylindrical surface (60), and a tapered support surface (64) at the outer end of each said tapered surface (62) and with respect to each ferrule member (10), said front cylindrical section (20) is slightly greater in diameter than the diameter of said central cylindrical surface (60) of said housing member (58), said tapered section (22) of the ferrule is slightly smaller in dimension than the corresponding tapered surface of the profiled bore (62), and said alignment section (24) is slightly larger in dimension than said support surface (64), all such that when said profiled front end of a said ferrule member (10) is disposed in said profiled bore (56) of said housing member (58) said front cylindrical section (20) tightly engages said central cylindrical surface (60) causing a reduction in diameter of said front cylindrical section (20) and axially aligns the fiber optic transmission member (14), said tapered section (22) is disposed along said tapered surface (62), and said support surface (64) tightly and sealingly engages said alignment section (24) thereby supporting said ferrule member (10) against lateral forces thereon.

2. A fiber optic connector as set forth in claim 1, further characterized in that said support surface (64) and said alignment section (24) are cylindrical.

3. A fiber optic connector as set forth in claim 1, further characterized in that said support surface (64) and said alignment section (24) are tapered.

4. A fiber optic connector as set forth in claim 1, further characterized in that each said ferrule member (10) has tool-engaging means for engagement by a tool (78) to rotate said ferrule member (10) relative to said housing member (58) while light is being transmitted along the fiber optic transmission members (14) to accurately align the axes of the fiber optic transmission members (14).

5. A fiber optic connector as set forth in claim 1, further characterized in that said front surface (35) of each said ferrule member (10) has an adjacent peripheral surface extending between the front surface and an external surface (52) of said front cylindrical section (20) which, in conjunction with the housing's central cylindrical surface forms a reservoir surrounding the front ends of the ferrule members (10) within said central cylindrical surface (60) of said housing member (58) after engagement or near engagement of front ends of two ferrule members (10) assembled within a housing member (58).

6. A fiber optic connector as set forth in claim 5, further characterized in that said peripheral surface (52) is rounded.

7. A fiber optic connector as set forth in claim 1, further characterized in that said housing member (58) has a slot (70) in communication with said central cylindrical surface (60).

8. A fiber optic connector as set forth in claim 1, further characterized in that said ferrule member (10) includes a rear cylindrical section (26) against which said coupling member (72) engages.

**Patentansprüche**

1. Lichtleiter-Verbinder zum miteinander Verbinden von Lichtleiter-Übertragungselementen (14), mit einem starren Gehäuseelement (58) mit einer sich durch dieses hindurcherstreckenden Profilbohrung (56), mit einem Paar von Zwingenelementen (10) aus federnd steifem, jedoch verformbaren Material mit einer sich axial durch das Zwingenelement (10) hindurcherstreckenden Profilbohrung (32), wobei jedes Zwingenelement (10) ein Ende eines Lichtleiter-Übertragungselements (14) abschließt und einen profilierten vorderen Endabschnitt aufweist, der einen vorderen zylindrischen Abschnitt (20), einen schräg nach außen verlaufenden Abschnitt (22) und einen Ausrichtungsabschnitt (24) besitzt, wobei der vordere zylindrische Abschnitt (20) eine im wesentlichen flache vordere Fläche (35) aufweist und das vordere Ende des Lichtleiter-Übertragungselements (14) mit der flachen vorderen Fläche (35) koplanar ist, woebei die profilierten vorderen Endabschnitte jedes Zwingenelements (10) in verschiedenen Enden der Profilbohrung (56) des Gehäuseelements (58) angeordnet sind und ein Kopplungselement (72) an jedem Zwingenelement (10) angreift und das profilierte vordere Ende jedes Zwingenelements (10) in die Profilbohrung (56) des Gehäuseelements (58) hineindrückt und die einander gegenüberliegenden vorderen Flächen (35) der Zwingenelemente (10) dadurch dazu veranlaßt werden, aneinander anzugreifen oder nahezu aneinander anzugreifen, dadurch gekennzeichnet, daß die Profilbohrung (56) des starren Gehäuseelements (58) eine zentrale zylindrische Fläche (60), sich beidseits der zentralen zylindrischen Fläche (60) in schräg nach außen verlaufende Flächen (62) sowie eine schräg verlaufende Haltefläche (64) an dem äußeren Ende jeder schräg verlaufenden Fläche (62) aufweist, und daß in bezug auf jedes Zwingenelement (10) der vordere zylindrische Abschitt (20) einen geringfügig größeren Durchmesser als der Durchmesser der zentralen zylindrischen Fläche (60) des Gehäuseelements (58) aufweist, der schräg verlaufende Abschnitt (22) der Zwinge geringfügig geringere Abmessungen als die entsprechende schräg verlaufende Fläche der Profilbohrung (62) aufweist und der Ausrichtungsabschnitt (24) geringfügig größere Abmessungen als die Haltefläche (64) aufweist, und zwar insgesamt derart, daß bei Anordnung des profilierten vorderen Endes eines solchen Zwingenelements (10) in der Profilbohrung (56) des Gehäuseelements (58) der vordere zylindrische Abschnitt (20) an der zentralen zylindrischen Fläche (60) fest angreift und dadurch eine Reduzierung des Durchmessers des vorderen zylindrischen Abschnitts (20) verursacht und das Lichtleiter-Übertragungselemenbt (14) axial ausrichtet, der schräg verlaufende Abschnitt (22) längs der schräg verlaufenden Fläche (62) angeordnet ist und die Haltefläche (64) an dem Ausrichtungsabschnitt (24) fest und abdichtend angreift, wodurch das Zwingenelement (10) gegen auf dieses einwirkende seitliche Kräfte gehaltert ist.

2. Lichtleiter-Verbinder nach Anspruch 1, weiterhin dadurch gekennzeichnet, daß die Haltefläche (64) und der Ausrichtungsabschnitt (24) zylindrisch ausgebildet sind.

3. Lichtleiter-Verbinder nach Anspruch 1, weiterhin dadurch gekennzeichnet, daß die Haltefläche (64) und der Ausrichtungsabschnitt (24) schräg verlaufend ausgebildet sind.

4. Lichtleiter-Verbinder nach Anspruch 1, weiterhin dadurch gekennzeichnet, daß jedes Zwingenelement (10) eine Werkzeugangreifeinrichtung zum Angreifen durch ein Werkzeug (78) zum Verdrehen des Zwingenelements (10) relativ zu dem Gehäuseelement (58) während der Übertragung von Licht entlang der Lichtleiter-Übertragungselemente (14) besitzt, um die Achsen der Lichtleiter-Übertragungselemente (14) exakt miteinander auszurichten.

5. Lichtleiter-Verbinder nach Anspruch 1, weiterhin dadurch gekennzeichnet, daß die vordere Fläche (35) jedes Zwingenelements (10) eine an diese angrenzende Umfangsfläche aufweist, die sich zwischen der vorderen Fläche und einer Außenfläche (52) des vorderen zylindrischen Abschnitts (20) erstreckt und in Verbindng mit der zentralen zylindrischen Fläche des Gehäuses ein die vorderen Enden der Zwingenelemente (10) innerhalb der zentralen zylindrischen Fläche (60) des Gehäuseelements (58) umgebendes Reservoir bildet, nachdem die vorderen Enden zweier innerhalb eines Gehäuseelements (58) montierten Zwingenelemente (10) miteinander in Eingriff getreten sind oder nahezu miteinander in Eingriff getretnen sind.

6. Lichtleiter-Verbinder nach Anspruch 5, weiterhin dadurch gekennzeichnet, daß die Umfangsfläche (52) abgerundet ist.

7. Lichtleiter-Verbinder nach Anspruch 1, weiterhin dadurch gekennzeichnet, daß das Gehäuseelement (58) einen mit der zentralen zylindrischen Fläche (60) in Verbindung stehenden Schlitz (70) aufweist.

8. Lichtleiter-Verbinder nach Anspruch 1, weiterhin dadurch gekennzeichnet, daß das Zwingenelement (10) einen hinteren zylindrischen Abschnitt (26) aufweist, an dem das Kopplungselement (72) angreift.

## Revendications

1. Connecteur de fibres optiques destiné à connecter entre eux des éléments (14) de transmission à fibres optiques, comprenant un élément de boîtier rigide (58) à travers lequel s'étend un alésage profilé (56), deux éléments de virole (10) en matière élastiquement rigide, mais déformable, à travers lesquels s'étend axialement un alésage profilé (32), chaque élément de virole (10) terminant une extrémité d'un élément (14) de transmission à fibre optique et ayant une section extrême avant profilée qui comporte une section cylindrique avant (20), une section conique (22) s'évasant vers l'extérieur et une section d'alignement (24), ladite section cylindrique avant (20) ayant une surface avant sensiblement plane (35), l'extrémité avant de l'élément (14) de transmission à fibre optique étant coplanaire à ladite surface avant plane (35), les sections extrêmes avant profilées de chaque élément de virole (10) étant disposées dans une extrémité différenté de l'alésage profilé (56) de l'élément de boîtier (58), et un élément d'accouplement (72) s'enclenchant avec chaque élément de virole (10) et rappelant l'extrémité avant profilée de chaque élément de virole (10) vers l'intérieur de l'alésage profilé (56) de l'élément de boîtier (58), amenant les surfaces avant opposées (35) des éléments de virole (10) à porter ou presque l'une contre l'autre, caractérisé en ce que l'alésage profilé (56) dudit élément de boîtier rigide (58) présente une surface cylindrique centrale (60), des surfaces coniques (62) s'évasant vers l'extérieur de chaque côté de ladite surface cylindrique centrale (60), et une surface conique (64) de support à l'extrémité extérieure de chaque surface conique (62) et, par rapport à chaque élément de virole (10), ladite section cylindrique avant (20) est d'un diamètre légèrement plus grand que le diamètre de ladite surface cylindrique centrale (60) dudit élément de boîtier (58), ladite section conique (22) de la virole est d'une dimension légèrement inférieure à celle de la surface conique correspondante de l'alésage profilé (62), et ladite section d'alignement (24) est d'une dimension légèrement plus grande que celle de ladite surface de support (64), le tout de manière que, lorsque ladite extrémité avant profilée dudit élément de virole (10) est disposée dans ledit alésage profilé (56) dudit élément de boîtier (58), ladite section cylindrique avant (20) porte étroitement contre ladite surface centrale cylindrique (60), provoquant une réduction de diamètre de ladite section cylindrique avant (20), et aligne axialement l'élément (14) de transmission à fibre optique, ladite section conique (22) est disposée le long de ladite surface conique (62), et ladite surface (64) de support porte étroitement et de façon étanche contre ladite section d'alignement (24) afin de supporter sur elle ledit élément de virole (10) à l'encontre de forces latérales.

2. Connecteur de fibres optiques selon la revendication 1, caractérisé en outre en ce que ladite surface (64) de support et ladite section d'alignement (24) sont cylindriques.

3. Connecteur de fibres optiques selon la revendication 1, caractérisé en outre en ce que ladite surface (64) de support et ladite section d'alignement (24) sont coniques.

4. Connecteur de fibres optiques selon la revendication 1, caractérisé en outre en ce que chacun desdits éléments de virole (10) comporte des moyens d'enclenchement d'un outil destinés à être enclenchés par un outil (78) pour faire tourner ledit élément de virole (10) par rapport audit élément de boîtier (58) pendant que de la lumière est transmise le long des éléments (14) de transmission à fibres optiques afin d'aligner avec précision les axes des éléments (14) de transmission à fibres optiques.

5. Connecteur de fibres optiques selon la revendication 1, caractérisé en outre en ce que ladite surface avant (35) de chacun desdites éléments de virole (10) présente une surface périphérique adjacente s'étendant entre la surface avant et une surface extérieure (52) de ladite section cylindrique avant (20) qui, conjointement avec la surface cylindrique centrale du boîtier, forme un réservoir entourant les extrémités avant des éléments de virole (10), à l'intérieur de ladite surface cylindrique centrale (60) dudit élément (58) de boîtier après l'entrée en contact ou presque des extrémités avant des deux éléments de virole (10) assemblés à l'intérieur d'un élément de boîtier (58).

6. Connecteur de fibres optiques selon la revendication 5, caractérisé en outre en ce que ladite surface périphérique (52) est arrondie.

7. Connecteur de fibres optiques selon la revendication 1, caractérisé en outre en ce que ledit élément de boîtier (58) présente une rainure (70) en communication avec ladite surface cylindrique centrale (60).

8. Connecteur de fibres optiques selon la revendication 1, caractérisé en outre en ce que ledit élément de virole (10) comprend une section cylindrique arrière (26) contre laquelle porte ledit élément d'accouplement (72).

Fig. 1

Fig. 2

Fig. 3

Fig. 4

Fig. 5

Fig. 6

Fig. 7

Fig. 9

Fig. 8

EP 0 128 044 B1